**Europäisches Patentamt**

**European Patent Office**

**Office européen des brevets**

(19)

(11) Publication number: **0 031 224**

**A2**

(12) # EUROPEAN PATENT APPLICATION

(21) Application number: **80304487.4**

(22) Date of filing: **12.12.80**

(51) Int. Cl.³: **B 63 B 35/02**
**A 01 D 44/00, B 63 H 5/02**

(30) Priority: **24.12.79 GB 7944389**

(43) Date of publication of application:
**01.07.81 Bulletin 81/26**

(84) Designated Contracting States:
**DE FR GB IT NL**

(71) Applicant: **JOHN WILDER LIMITED**
**Lower Wharf**
**Wallingford Oxon OX10, 9AP(GB)**

(72) Inventor: **Wilder, John Herbert Wyndham**
**St. Lucians Wallingford**
**Berkshire(GB)**

(72) Inventor: **Horn, Alan Nelson**
**1, St. Rumbolds Road**
**Wallingford Berkshire(GB)**

(74) Representative: **Arthur, George Fitzgerald et al,**
**KILBURN & STRODE 30, John Street**
**London WC1N 2DD(GB)**

(54) Water weed cutting and/or clearing vessel.

(57) This invention is a vessel for cutting and/or clearing water weed which vessel can be propelled by paddles one at each side of the hull, each of which is capable of propelling the vessel both in a first position (15) at one side of the hull and in a second position (25) beyond one end of the hull and within a surface which is a continuation of the side of the hull. Each paddle is mounted on an up-and-over arm (1) which can be operated by hydraulic actuator (10) and can be rotated about its axis when in the vertical position (26). In the first position the vessel is easily manoeuvrable; in a second position (25) of the paddles, the vessel has a substantially reduced overall width.

.1.

# WATER WEED CUTTING AND/OR CLEARING
## VESSEL

This invention relates to water weed cutting and / or clearing vessels. A water weed cutting vessel which has proved to be commercially successful, has been patented in our earlier British Patent Specification Nos. 1302031 and 1414921.

An object of the present invention is to provide an improved design of vessel which makes it possible to cut water weeds in a narrow channel, to cut grass and other growth above the water line on a bank of a watercourse and to make it easier to pull the vessel out of the watercourse onto a trailer for transportation over land from one watercourse to another.

According to the present invention, a water weed cutting and/or clearing vessel has a number (preferably two) paddles, each paddle being capable of propelling the vessel in either of a first position at one side of the hull, or a second position beyond one end of the hull. There are preferably means provided to assist and/or guide movement of each paddle between the two positions.

In a third position, the paddles can be stored for transport within the width permitted by law for transport on the public roads.

In the second position, it is preferred that the paddle is within a surface which is a continuation of the side of the hull, or at least is capable of operation when positioned within such a surface.

In the first position, each paddle is preferably outside the side of the hull somewhere near the centre.

In Specification No. 1302031, there were a pair of paddles, each capable of being withdrawn into a recess on its side of the hull. That design had the advantage that the paddles could be in line with the central transverse axis of the hull, which made for very precise manoeuvring by selective use of the paddles, yet they could be withdrawn into the recesses on each side of the hull when it was necessary to decrease the overall width to allow it to be transported on a public road from one watercourse to another.

Watercourses may have obstructions such as culverts weirs and narrow bridges and it is therefore essential for water weed cutting vessels to be moved easily by land around such obstructions or from one watercourse to another. To do this, it must be easy to pull the vessel out of the water on to a trailer, transport it on the trailer to the new site and launch it again. The original design of hull with the recess on each side and the paddles in their withdrawn position made it difficult to guide the boat so that the fore-and aft centre line of the boat is in the same vertical plane as the fore-and-aft centre line of the trailer.

In this invention, the paddles can be lifted above the vessel and the hull is of constant width along the greater part of its length. These straight parallel sides allow vertical rollers on the trailer to guide the hull into its central position on the trailer thereby making it possible to launch and reclaim the vessel using only one man whereas the previous design required at least two men for this

The present invention has the advantage that if it is not desired to cut the sides of a river bank, and the river is quite wide, the paddles can be at the sides positioned outside the general line of the side of the hull to have the advantage that the hull is very manoeuvrable. On the other hand if a bank cutter is to be used at one side, the paddle at that side can be moved into its second position behind the stern or in front of the bow of the hull which allows the hull to be propelled close to the bank and makes it easy for the bank cutter to reach the bank without too much overhang. The weight of the cutter is counterbalanced by the paddle which remains on the opposite side of the boat. The bank cutter may be of the well known reciprocating knife design widely used for cutting grass for hay.

Moreover, for operation in a very narrow channel, both paddles can be moved into the second position, say beyond the stern of the hull, while a forward water weed cutter is operating at the bows.

In either position there will be means for controlling each paddle , both as to speed and to sense of rotation, and preferably through a single control as described in British Patent Specification No. 1414921.

In one form of the invention, each paddle is mounted on an up-and-over pivot arm, pivotted at a point near one corner of the hull, and including means for rotation about the axis of the pivot arm for easy repositioning of a paddle from one position to another.

The cnetre of gravity of the vessel will be considerably shifted when either or each paddle is moved from one position to the other, and in order to provide some counter-balancing effect, it is preferred that there are two tanks for liquid, one near the bows and one near the stern of the hull, with means for transferring liquid from one to the other. A considerable amount of hydraulic oil has to be provided for the hydraulic drives and rams used in the vessel and it is convenient to use this as the liquid for counter-balancing the weight of the paddles. It is important to keep down the overall weight so as to reduce the draught of the vessel thereby allowing weed cutting to take place in shallower waters.

The invention may be carried into practice in various ways, and one embodiment will now be described by way of example, with reference to the accompanying drawings, of which;

FIGURE 1 is a diagrammatic side view of one side assembly at one side of a hull; ( a second assembly of the opposite hand is fitted on the other side of the hull;)

FIGURE 2 is a side view which shows the method of raising the paddle to a vertical position, turning the paddle and lowering into stowed position for transport;

FIGURE 3 is a view similar to FIGURE 2 which shows the method of lowering the paddles into a stern position; and

FIGURE 4 is a plan view of the complete boat and indicates the various positions of the paddles.

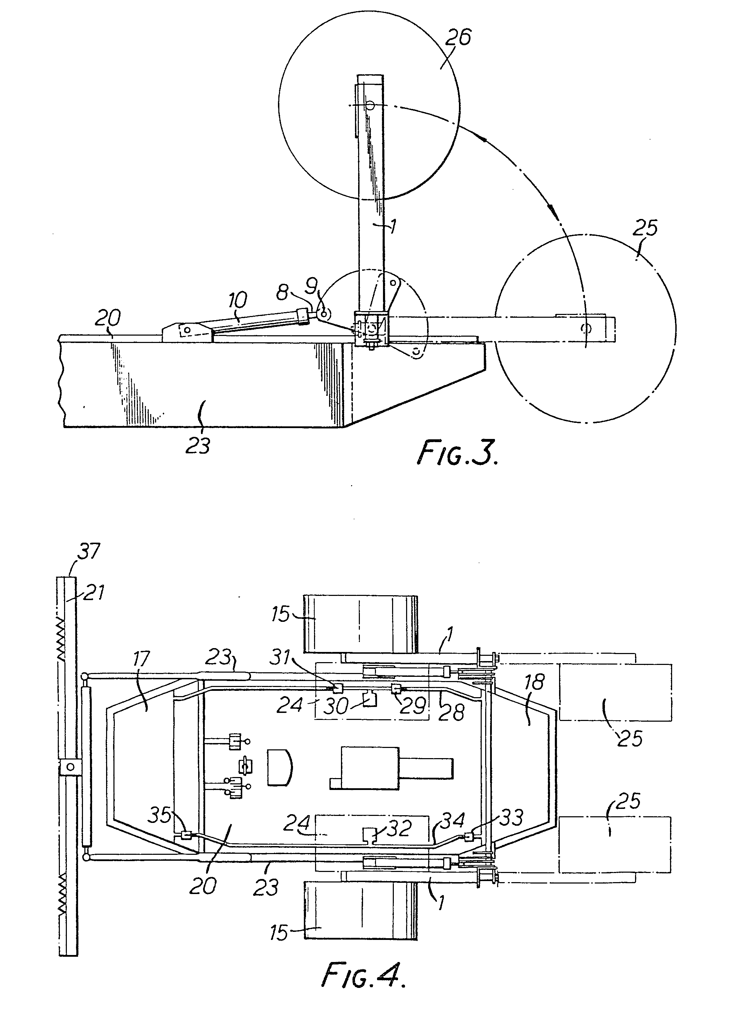

The hull 20 is generally similar to the hull described in British Patent Specification No. 1414921 except that it is of constant width throughout the greater part of its length, and just tapers at the bows and at the stern. Thus, there is not a recess in each side for a paddle, as was the case with the hull shown in FIGURE 3 in Specification No. 1414921.

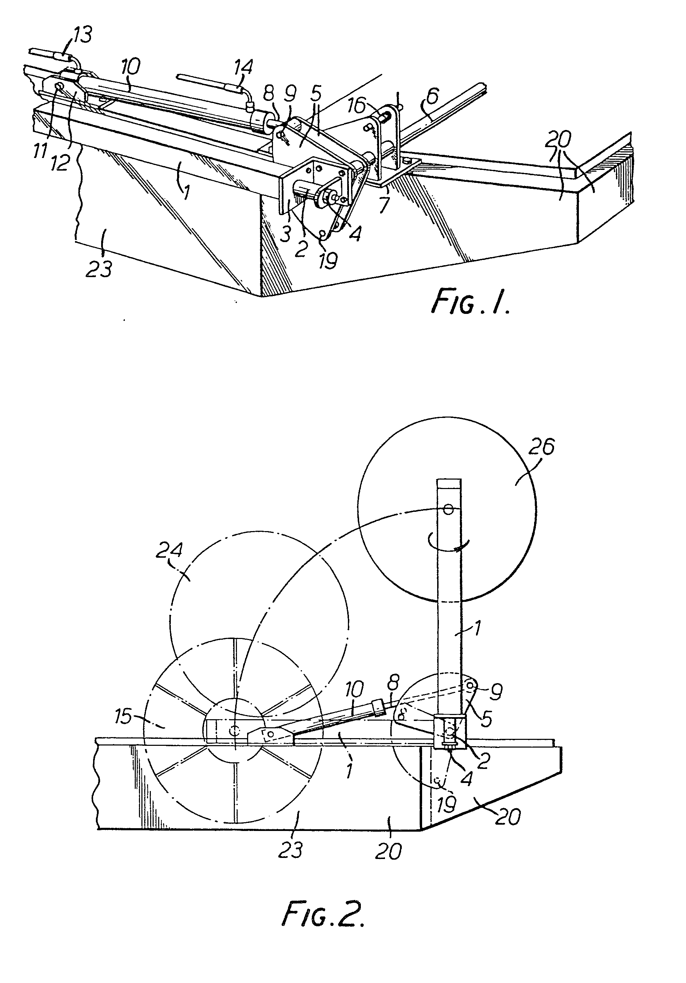

There are two paddles for propulsion of the hull, and in a first position 15 in FIGURES 2 and 4 they are on either side of the hull outwardly of the constant width side wall 23.

The hydraulic motor supporting and driving each paddle as in British Patent Specification Nos. 1302031 and 1414921 is carried on one end of a pivot arm 1, which has at the other end a fixed extension shaft in a journal bearing 2 carried by a hinge bracket 3. Movement of the pivot arm 1 in its bearing 2 is prevented by tightening a nut 4 on the end of the extension shaft. The hinge bracket 3 is bolted to a pair of quadrant plates 5 which are hingeably mounted on a transverse hinge shaft 6. The whole paddle side assembly is attached to the boat hull by means of an attachment bracket 7.

A double acting hydraulic cylinder 10 has its rod 8 connected to a pin 9 between the quadrant plates 5 and its cylinder end 10 to a pin 11 in a hinge bracket 12 attached to the boat hull 20.

A control valve (not illustrated) mounted in the boat hull controls the supply of high pressure oil to the hydraulic cylinder through pipes 13 and 14, from a stanks 17 or 18.

When the paddles are not in use during transport on a trailer overland, they are in the position shown at 24 in FIGURE 2 and FIGURE 4, in which they are above the hull and within the overall width of the hull. This allows the hull to be as wide as is legally permitted on the public highway, so that the hull can have little draught and high stability when in the water.

The constant hull width ( except at the ends) enables vertical guide rollers to be used on the trailer to guide the hull into a central position on the trailer.

To move the paddles from their side propulsion position 15 into their transport position 24, high pressure oil is fed into the two cylinders 10 through the pipes 13 to extend the rods 8, rotate the quadrants 5 and brackets 3, and raise the pivot arms 1 and paddles into a vertical position shown at 26 in FIGURES 2 and 3. The nuts 4 are loosened and the paddles and arms rotated 180° in the bearings 2 and the nuts 4 are re-tightened.

Oil can now be fed through the pipes 14 to retract the rods 8 and lower the paddles onto the upper surface of the hull.

For normal use with a cutter at the bows as indicated at 21, in FIGURE 4, where the water channel is wide, the paddles will be in the side propulsion position 15 where they are approximately in line with the centre of gravity of the hull and so enable the hull to be very precisely manoeuvred by individual control of the paddles, both as to rate, and sense of rotation as described in British Patent Specification No. 1302031.

If it is desired to cut grass and weed along the bank beside a stretch of water, a bank cutter can be used at one side 23 of the hull, and in order that the paddle at that side does not interfere with the operation of the bank cutter, and also so that the bank cutter can reach the bank without a large overhang which would upset the balance of the boat, the paddle on the bank side can be moved into a position astern of the boat, as shown at 25 in FIGURES 3 and 4. This is carried out by raising the paddle into the vertical position 26 as described above and retaining it in this position by engaging a spring-loaded retaining catch 16 in a hole provided for this purpose in the inner quadrant plate 5. The pin 9 can now be removed and the rod 8 of the cylinder 10 can be retracted by applying oil pressure through pipe 14. The pin 9 can now be fitted into a lower pair of holes 19, and the paddle can now be lowered into the position 25 astern of the boat by extending the rod 8. In addition, the direction of rotation of the paddle must be reversed. Quick release couplings ( not illustrated) are fitted in each of the flow and return lines to the paddle hydraulic motors which enables the oil lines to these motors to be disconnected and then reconnected so as to give the reversal of the oil flow required.

With one paddle in the side propulsion position 15, and the other in the stern propulsion position 25, the hull can be operated closer to a river or waterway bank so that the side 23 is unencumbered and a bank cutter can reach the bank easily. Propulsion and manoeuvring are possible by selective use of the two paddles.

If the hull has to be propelled through a very narrow channel, the second paddle can also be moved into its stern propulsion position 25 and then both paddles will propel from beyond the stern of the hull with no protrusion beyond either side wall 23.

It is also possible to lower the paddles in either position if a low bridge has to be negotiated.

When both the paddles are in the side
propulsion position 15, the correct attitude of the
boat is obtained with all the hydraulic oil stored in the
stern tank 18.

Movement of the paddles to the stern position 25
will considerably upset the centre of gravity of the
complete vessel and accordingly the hull is provided
with an alternative oil tank 17 at the bows, into which
the hydraulic oil for operating the vessel can be
transferred when the paddles are moved to the stern
position.

The hydraulic oil used for operation of the boat
is normally pumped from the tank 18 to a distributor
30 by way of a pipe 28 mounted in a low position,
through an open shutoff valve 29.

Individual pipes then feed oil to the pumps
for the various motors and hydraulic rams. A second shutoff valve 31 leading to the tank 17 is closed. Return
line oil from the motors and rams is collected in a
manifold 32 and returns to oil tank 18 through an
open third shutoff valve 33 and a pipe 34, returning
oil into the tank 18 at a high level. Oil is stopped
from running into the tank 17 by means of a closed
fourth shutoff valve 35.

To transfer oil to the tank 17 to counterbalance
the change in weight distribution with the paddles
astern, valve 35 is opened and valve 33 is closed.

Operation of any hydraulic circuit removes
oil from tank 18 and returns it to tank 17. When this
operation is complete,the valve 31 is opened and valve 29 is closed. Tank 17 is now the operative tank and supplies the necessary oil to the pumps.

In many areas of the world there are floating islands of weeds and grasses and this water weed cutting and clearing vessel can be used to cut slices off them, either to control their size or to cut them into small pieces which can be readily disposed of. The cutter 21, described in British Patent Specification Nos. 1302031 and 1414921 has two nearly vertical cutting sections 37 at each end. A suitable width for a single slice to be cut from an island of floating weed is the lateral distance by which the vertical cutting section 37 projects beyond the side of the hull 23. If the oil in the cylinder 10 is released when the slice of floating weed island cut by the vertical cutting section 37 reaches the paddle, the paddle will be free to rise and "walk" along the top of the slice and achieve propulsion. Adjustable stops ( not illustrated) are provided to prevent the paddle dropping below a pre-selected height either when they are in the side position 15 or the stern position 25.

For clearing cut weed, a rake would be substituted for the cutter 21.

.11.

CLAIMS

1.    A water weed cutting and/or clearing vessel
having a number of paddles, each paddle being capable
of propelling the vessel whether in a first position
(15) at one side of the hull (23), or a second
position (25) beyond one end of the hull, and means
(1,10) provided to assist and/or guide movement of
each paddle between the two positions.

2.    A vessel as claimed in Claim 1 in which in the
second position a paddle is within a surface which is
a continuation of the side of the hull.

3.    A vessel as claimed in Claim 1 or Claim 2  in
which in the first position a paddle is outside
the side of the hull somewhere near the centre.

4.    A vessel as claimed in any preceding claim
in which in an intermediate position a paddle is
supported above or on the hull within the side of
the hull.

5.    A vessel as claimed in any preceding
claim including a single control for controlling
each paddle, both as to speed and to sense of rotation.

6.    A vessel as claimed in any preceding claim
in which each paddle is mounted on an up-and-over
arm (1) pivotted at a point (6) near one corner of the
hull.

7.    A vessel as claimed in Claim 6 in which each paddle
is mounted for rotation about the axis of the pivot
arm.

.12.

8.    A vessel as claimed in any preceding claim
including  power means (10) for moving the paddles
between their various positions.

9.    A vessel as claimed in any preceding claim in
which a paddle at one side of the hull can be made free
to lift and "walk" over any obstruction or floating
object in its path.

10.   A vessel as claimed in any preceding claim
in which the hull has two tanks (17, 18) for hydraulic
fluid for actuators (10) on the vessel, or other
liquid, one near the bows and one near the stern,
with means for transferring liquid from one to the
other.

FIG.1.

FIG.2.

0031224

1/2

0031224

FIG.3.

FIG.4.